# EUROPÄISCHE PATENTSCHRIFT

(11) **EP 0 805 838 B1**
(45) Veröffentlichungstag und Bekanntmachung des Hinweises auf die Patenterteilung: **23.05.2001**
(21) Anmeldenummer: 96901735.9
(22) Anmeldetag: 18.01.1996
(51) Int. Cl.: C09J 4/00

(54) **AEROB HÄRTBARER KLEBSTOFF**
AEROBICALLY HARDENABLE ADHESIVE
ADHESIF A DURCISSEMENT AEROBIE

(30) Priorität: 24.01.1995 DE 19501933
(43) Veröffentlichungstag der Anmeldung: 12.11.1997
(73) Patentinhaber: Henkel Kommanditgesellschaft auf Aktien, 40191 Düsseldorf (DE)
(72) Erfinder: FRIESE, Carsten, D-22559 Hamburg (DE); BERGMANN, Frank, D-30629 Hannover (DE)
(86) Internationale Anmeldenummer: EP9600199
(87) Internationale Veröffentlichungsnummer: WO9623036

(56) Entgegenhaltungen:
- EP-A- 0 079 703
- EP-A- 0 356 875
- EP-A- 0 358 033
- WO-A-88/08868
- GB-A- 2 121 811
- US-A- 4 052 244

## Beschreibung

Die Erfindung betrifft einen aerob härtbaren Klebstoff auf der Basis von Acrylaten bzw. Methacrylaten, der mindestens einen radikal-bildenden Initiator und mindestens einen Beschleuniger enthält.

Derartige Acrylat-Klebstoffe sind bekannt. So wird in der DE 33 20 918 ein zweikomponentiger Acrylatklebstoff beschrieben, bei dem die erste Komponente aus folgenden Bestandteilen besteht: Urethan-Acrylat-Blockharz, Hydroxyethylmethacrylat, Cumolhydroperoxid, 1-Acetyl-2-Phenylhydrazin, Benzolsulfimid, Acrylsäure und Chelator. Der zweite Teil besteht aus folgenden Bestandteilen: Urethan-Acrylat-Blockharz, Hydroxyethylmethacrylat, Kupferoctoat und einem Chelator. Beide Komponenten werden in einem Volumenverhältnis von 1 : 1 gemischt. Nach 20 Sekunden wird eine haltbare Bindung erzielt. Zu dem Übergangsmetallbeschleuniger heißt es auf Seite 19 ab Zeile 16: "Übergangsmetallbeschleuniger sind vorzugsweise ein Salz oder Komplex von Kupfer, Nickel, Kobalt oder Eisen. Beispiele für diese Beschleuniger sind bevorzugt Kupferoctoat, Kupfernaphthenat, Kupferethylhexanoat und Kupferacetylacetonat und andere." Nachteilig bei diesem bekannten Klebstoff ist sein stechender Geruch. Außerdem beobachtet man zwar eine schnelle exotherme Polymerisation, jedoch erhält man ein oberflächenklebriges Polymer, insbesondere wenn der Klebstoff als dünner Film mit einer Dicke von 0,1 bis 0,2 mm vorliegt. Ist die Klebstoffschicht noch dünner, so ist die Polymerisation Sauerstoffinhibiert.

Die erfindungsgemäße Aufgabe bestand demnach darin, einen Klebstoff zu finden, der diese Nachteile nicht hat, der also weitgehend geruchsfrei ist und so vollständig aushärtet, daß seine Oberfläche an der Grenze zur Luft nicht klebrig ist.

Der erfindungsgemäße Lösung ist den Patentansprüchen zu entnehmen.

Sie besteht im wesentlichen darin, zweikomponentige, aerob härtende Klebstoffzusammensetzungen bereitzustellen, bei der eine Komponente Acrylate und/oder Methacrylate mit einer Siedetemperatur von mindestens 120°C bei Normaldruck verwendet werden und die zweite Komponente entweder eine Trockenstoffmischung oder einen Trockenstoff und einen Übergangsmetallbeschleuniger enthält, wobei Trockenstoff und Übergangsmetallbeschleuniger Verbindungen unterschiedlicher Metalle sind.

Der erfindungsgemäße Klebstoff basiert auf Acrylaten und/oder Methacrylaten, d. h. die reaktive Komponente besteht gewichtsmäßig überwiegend aus einem Ester der Acrylsäure und/oder der Methacrylsäure. Daneben können noch andere reaktive Komponenten anwesend sein, z. B. copolymerisierbare Allyl- oder Vinyl-Verbindungen. Als Ester der Acrylsäure bzw. Methacrylsäure kommen nur die mit einem bei Raumtemperatur relativ hohem Dampfdruck in Frage. In erster Näherung handelt es sich dabei um Verbindungen mit einem Siedepunkt von mehr als 120 °C bei Normaldruck, vorzugsweise mehr als 150 °C.

Die Acrylate bzw. Methacrylate können eine oder mehrere reaktive Doppelbindungen enthalten. Der Alkoholrest kann Heteroatome enthalten, z. B. in Form von Ether-, Alkohol-, Carbonsäure-, Ester- und Urethan-Gruppen.

Eine wichtige Klasse der Acrylate bzw. Methacrylate sind die Polyurethan(Meth)acrylate (PUMA). Diese können Verbindungen der allgemeinen Formel (II)

[H₂C=CR¹-C(=O)-O-R²-O-C(=O)-NH-Q-NH-C(=O)]₂[{-O-R^{4a}-O-C(O=)-NH-Q'-NH-C(O=)_{}}m-O-R^{4a}-O-] (II)

sein, worin
- m = 0 bis 10,
- R¹ = Wasserstoff oder Methylgruppe,

- R² = eine lineare oder verzweigte Alkylgruppe mit 2 bis 6 Kohlenstoffatomen oder ein Alkylenoxid mit 4 bis 21 Kohlenstoffatomen ist,
- Q und Q' unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und
- R^{4a} von einem Polyesterdiol mit einem C:O-Verhältnis von > 2,6, einem C:H-Verhältnis < 10 und einem Molekulargewicht von 1000 bis 20000 abgeleitet ist.

Zusätzlich kann die Zusammensetzung eine oder mehrere der radikalisch polymerisierbaren Verbindungen (A) und/oder (B) der allgemeinen Formel:

(H₂C=CR¹-C(=O)-O-R²-O-C(=O)-NH-)ₙ R³ (I)

enthalten, worin
- R¹ = Wasserstoff oder eine Methylgruppe,
- R² = eine lineare oder verzweigte Alkylgruppe mit 2 bis 6 Kohlenstoffatomen oder Alkylenoxide mit 4 bis 21 Kohlenstoffatomen und
- n = 1, 2 oder 3 ist,
(A) wobei R³ für n = 1 ist:
- Eine Acrylgruppe mit 6 bis 18 Kohlenstoffen,
- geradkettige oder verzweigte Alkylgruppe mit 1 bis 18 Kohlenstoffatomen oder
- Cycloalkylgruppe mit 3 bis 12 Kohlenstoffatomen
(B) und wobei R³ für n = 2 ist:

[-Q-NH-C(=O)]₂[{-O-R⁴-O-C(=O)-NH-Q'-NH-C(=O)}ₘ-O-R⁴-O-]

wobei m = 0 bis 10 ist und
R⁴
a) ein Polycaprolactondiol-Rest
b) ein Polytetrahydrofurfuryldiol-Rest
oder wobei R³ für n = 3 ist:

[-Q-NH-C(=O)-O-((CH₂)₅-C(=O))ₚ-]₃ R⁵,

- wobei R⁵ ein Triol-Rest eines 3 bis 6 Kohlenstoffatome enthaltenden, linearen oder verzweigten dreiwertigen Alkohols und p = 1 bis 10 ist und
- Q und Q' unabhänig voneinander 6 bis 18 Kohlenstoffatome enthaltende aromatische, aliphatische oder cycloaliphatische Gruppen sind, die sich von Diisocyanaten oder Diisocyanatgemischen ableiten.

Außerdem können ein oder mehrere (Meth)acrylat-Comonomere (C) verwendet werden, die keine Urethangruppen enthalten. Die Anteile der reaktiven Verbindungen A, B und C im Klebstoff sind:
- 0 bis 80 Gew.-% einer oder mehrerer der Verbindungen (B) und 100 bis 20 Gew.-% einer oder mehrerer der Verbindungen (A) oder 100 bis 20 Gew.-% eines Gemisches einer oder mehrerer der Verbindungen (A) und (C), oder
- 2 bis 80 Gew.-% einer oder mehrerer der Verbindungen (B) und 98 bis 20 Gew.-% einer oder mehrerer der Verbindungen (C), jeweils bezogen auf die Gesamtmenge (A)+(B)+(C), enthält.

Die Verbindungen der Formel (1) sind herstellbar nach im Stand der Technik an sich bekannten Verfahren durch Umsetzung eines in der Estergruppe Hydroxylgruppen enthaltenden Acrylates (R¹=H) oder Methacrylates (R¹=CH₃) mit Isocyanatgruppen enthaltenden Verbindungen unter Bildung einer Urethangruppe. Die Hydroxyalkylacrylate oder -Methacrylate enthalten Alkylgruppen, die linear oder verzweigt sein können und zwischen 2 und 6 Kohlenstoffatome enthalten. Gemäß der Erfindung können auch die Ester von Acrylsäure und Methacrylsäure mit Polyethylenglykol und/oder Polypropylenglykol eingesetzt werden. Derartige Acrylate oder Methacrylate enthalten 4 bis 21 Kohlenstoffatome in der Estergruppe, entsprechend 2 bis 10 Ethylenoxideinheiten und 1 bis 7 Propylenoxideinheiten. Die Herstellung derartiger Ester ist dem Fachmann bekannt.

### Komponente (A):

Urethan(meth)acrylate der Formel (I) für n = 1 sind bekannt und können nach bekannten Verfahren aus den zugrundeliegenden Isocyanaten durch Umsetzung mit den entsprechenden Hydroxylgruppen enthaltenden (Meth)acrylaten der allgemeinen Formel

H₂C=CR¹-C(=O)-O-R²-OH

erhalten werden.

Derartige Verfahren sind in der WO-86/01153 oder der US 4,439,600 beschrieben.

Geeignete Acrylate oder Methacrylate sind solche, für die R² eine Ethylen-, Propylen-, Isopropylen-, n-Butylen-, Isobutylen-Gruppe oder 4 bis 7 Ethylenoxid- oder Propylenoxideinheiten enthalten.

Bevorzugt für die Umsetzung der Isocyanate mit den Hydroxylgruppen tragenden Acrylaten oder Methacrylaten werden jedoch Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylenglykolmethacrylat, Polypropylenglykolacrylat und Polypropylenglykolmethacrylat.

Bei den geradkettigen oder verzweigten Alkylgruppen mit 1 bis 8 Kohlenstoffatomen für R³ handelt es sich insbesondere um Methyl-, Ethyl, Propyl-, Isopropyl-, n-Butyl-, Isobutyl-, tert.-Butyl-, Pentyl-, Isopentyl-, Neopentyl- oder die Hexylgruppe.

Bei den Cycloalkylgruppen mit 3 bis 12 Kohlenstoffatomen handelt es sich vorzugsweise um solche, die ausgewählt sind aus der Cyclopropyl-; Cyclobutyl-, Cyclopentyl-, Cyclohexyl- und Cycloheptylgruppe.

Als aromatische, 6 bis 18 Kohlenstoffatome enthaltende Gruppen sind insbesondere die Phenyl-, 2-Toluenyl-, 4-Toluenyl- und die Xylenylgruppe zu erwähnen, die durch Reaktion der Hydroxylgruppen enthaltenden (Meth)acrylate mit den entsprechenden Isocyanaten eingeführt wird.

### Komponente (B):

Bei den Verbindungen der allgemeinen Formel (I) für den Fall, daß n = 2 ist, handelt es sich um Umsetzungsprodukte der oben genannten Hydroxylgruppen enthaltenden Acrylate oder Methacrylate mit Isocyanaten, die erhältlich sind durch Reaktion von geeigneten Diolen mit Diisocyanaten. Bei den Diolen handelt es sich um a) Polycaprolactondiole, b) Polytetrahydrofurfuryldiole und c) spezielle Polyesterdiole. Das Molverhältnis bei der Reaktion von den Diolen mit den Diisocyanaten kann im Verhältnis von 1:2 bis zu 1:1,1 variieren.

a) Polycaprolactondiole sind nach an sich bekannten Verfahren erhältlich durch Ringöffnungspolymerisation von Caprolacton mit geeigneten Diolen, wobei das Verhältnis von Caprolacton zum Diol 1 bis 20 beträgt, also 2 bis 40 Mol Caprolacton pro Mol Diol eingesetzt wird. Das Molekulargewicht der Polycaprolactondiole beträgt zwischen 200 und 4000.

Als Diole kommen insbesondere lineare oder verzweigte zweiwertige, 2 bis 6 Kohlenstoffatome enthaltende Alkohol in Frage, die ausgewählt sind aus Ethylenglykol, 1,2-Propandiol, 1,3-Propandiol, 1,2-, 1,3- oder 1,4-Butandiol, 1,5-Pentandiol, 2-Methyl-1,4-butandiol, 2,2-Dimethyl-1,3-Propandiol, 1,2- oder 1,6-Hexandiol, 1,10-Decandiol.

Die Reaktionsprodukte aus dem Diol und dem Caprolacton werden anschließend nach dem Fachmann bekannten Verfahren mit aromatischen, aliphatischen oder cyclischen Diisocyanaten umgesetzt. Geeignete Diisocyanate von denen sich Q und unabhängig davon auch Q' ableitet, sind ausgewählt aus 2,4-Toluendiisocyanat, 2,6-Toluendiisocyanat, 4,4'-Diphenylmethandiisocyanat (MDI), 4,4'-Dicyclohexyldiisocyanat, meta- und para-Tetramethyl-xylendiisocyanat, 3-lsocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylendiisocyanat und Gemischen davon. Anschließend wird das Reaktionsprodukt aus dem Diol, dem Caprolacton und dem Disiocyanat nach an sich bekannten Verfahren mit dem Hydroxylgruppen enthaltenden Acrylat oder Methacrylat zum Polyurethan(meth)acrylat umgesetzt.

b) Der Aufbau der sich von Polytetrahydrofurfuryldiol ableitenden Verbindungen (B) erfolgt prinzipiell nach dem gleichen Schema wie unter a) beschrieben. Zunächst wird Polytetrahydrofurfuryldiol mit einem der oben unter a) genannten Diisocyanate zur Reaktion gebracht und das Reaktionsprodukt daraus mit den bereits unter a) erwähnten Hydroxylgruppen enthaltenden Acrylaten oder Methacrylaten zum Polyurethan(meth)acrylat umgesetzt. Hinsichtlich des Verfahrens zur Umsetzung von Diolen mit Diisocyanaten wird auf die dem Fachmann bekannte einschlägige Fachliteratur verwiesen. Das Molekulargewicht der Produkte beträgt zwischen 200 und 4500.

c) Durch den Einsatz der obengenannten Polyurethan(meth)acrylate der allgemeinen Formel (II) auf Basis spezieller Polyesterdiole werden besonders gute Eigenschaften, insbesondere hinsichtlich der Hydrophobierung erreicht. Diese Polyurethan(meth)acrylate weisen eine besondere elastifizierende Wirkung auf.

Bei diesen Polyurethan(meth)acrylaten handelt es sich um Verbindungen der allgemeinen Formel (II)

[H₂C=CR¹-C(=O)-O-R₂-O-C(=O)-NH-Q-NH-C(=O)]₂[{-O-R^{4a}-O-C(=O)-NH-Q'-NH-C(=O)}ₘ-O-R^{4a}-O-] (II)

wobei R¹, R², Q, Q' und m den oben genannten Definitionen entsprechen.

R⁴ entspricht Polyesterdiol-Resten, die sich von Polyesterdiolen ableiten, die gekennzeichnet durch ein C:O-Verhältnis von > 2,6, vorzugsweise > 3,0 und ein C:H-Verhältnis von < 10. Femer zeichnen sich diese Polyesterdiole durch ein Molekulargewicht von 1000 bis 20000, insbesondere von 1000 bis 10000 aus.

Die Herstellung dieser speziellen Polyesterdiole erfolgt durch Umsetzung von langkettigen Diolen, insbesondere Dimerdiol (hydrierte Dimerfettsäure) mit kürzerkettigen 4 bis 8 Kohlenstoffatome enthaltenden Dicarbonsäuren oder deren Anhydriden, insbesondere Bernsteinsäure oder Bemsteinsäureanhydrid. Die Polyesterdiole können auch hergestellt werden durch Umsetzung von kürzerkettigen 4 bis 8 Kohlenstoffatome enthaltenden Diolen, insbesondere 1,6-Hexandiol mit langkettigen Fettsäuren, insbesondere Dimerfettsäure-Gemisch aus dimerisierten Fettsäuren von acyclischen und cyclischen Dicarbonsäuren mit durchschnittlich 36 Kohlenstoffatomen. Es können aber auch Gemische aus langkettigen Diolen mit kürzerkettigen Diolen eingesetzt werden, wie insbesondere Gemische aus Hexandiol und Polyethylenglykol oder aus Dimerdiol und Diethylengylykol.

Allgemein als Diole besonders bevorzugt sind lineare oder verzweigte C₂-C₄₄-Alkyldiole wie Ethylenglykol, 1,2- oder 1,3-Propylenglykol, 1,2-, 1,3-oder 1,4-Butandiol, Neopentylglykol, 1,2- oder 1,6-Hexandiol, 1,10-Decandiol, 1,12-Octadecandiol. In Frage kommen aber auch cyclische C₆-C₄₄-Alkyldiole.

Ferner bevorzugt sind Ethergruppen enthaltende Diole, wie beispielsweise Di-, Tri- oder Tetraethylen- oder -propylenglykol oder deren oligomeren Homologen.

Allgemein als Dicarbonsäure besonders bevorzugt sind lineare, oder verzweigte C₂-C₄₄-Alkyldicarbonsäuren, wie Oxalsäure, Malonsäure, Bernsteinsäure, Glutarsäure, Adipinsäure, Pimelinsäure, Korksäure, Azelainsäure, Nonandicarbonsäure, Decandicarbonsäure, Undecandicarbonsäure oder deren technische Gemische. Zur Reaktion mit den Diolen können ebenfalls ungesättigte C₄-C₄₄-Dicarbonsäuren, wie Maleinsäure, Fumarsäure, Itaconsäure oder Aconitsäure eingesetzt werden.

Die Veresterung kann nach an sich bekannten Verfahren in Gegenwart eines Katalysators in einem geeigneten Lösungsmittel bei erhöhter Temperatur unter azeotroper Entfernung des Reaktionswassers erfolgen. Als Katalysator ist Zinn(II)octoat und als Lösungsmittel Xylen bevorzugt. Die so gewonnenen Polyesterdiole werden dann mit einem der oben unter a) genannten Diisocyanate umgesetzt und anschließend mit den bereits unter a) erwähnten Hydroxylgruppen enthaltenden Acrylaten oder Methacrylaten zum Polyurethan(meth)acrylat umgesetzt. Eine oder mehrere dieser auf den speziellen Polyesterdiolen basierenden Polyurethan(meth)acrylate können im Gemisch mit Aktivatoren und gegebenenfalls weiteren üblichen Zusätzen als Klebstoffzusammensetzung eingesetzt werden.

Bei den Verbindungen der allgemeinen Formel (I) für den Fall, daß n = 3 ist, handelt es sich um Umsetzungsprodukte der oben genannten Hydroxylgruppen enthaltenden Acrylate oder Methacrylate mit Isocyanaten, die erhältlich sind durch Umsetzung von geeigneten 3 bis 6 Kohlenstoffatome enthaltenden, linearen oder verzweigten dreiwertigen Alkoholen (Triolen) mit Caprolacton und anschließender Reaktion mit Diisocyanaten.

Polycaprolactontriole sind nach an sich bekannten Verfahren erhältlich durch Ringöffnungspolymerisation von Caprolacton mit geeigneten Triolen, wobei das Verhältnis von Caprolacton zu Triol 1 bis 10 beträgt, also 3 bis 30 Mol Caprolacton mit einem Mol Triol umgesetzt werden.

Als Triole kommen insbesondere solche in Frage, die ausgewählt sind aus Glycerin, 1,2,4-Butantriol, Trimethylolpropan (2-Hydroxymethyl-2-ethyl-1,3-propandiol) und Trimethylolethan (2-Methyl-2-hydroxymethyl-1,3-propandiol).

Die Reaktionsprodukte aus dem Triol und dem Caprolacton werden anschließend nach dem Fachmann bekannten Verfahren mit den unter a) genannten Diisocyanaten umgesetzt. Anschließend wird das Reaktionsprodukt aus dem Triol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.

Komponente (C): Die Auswahl erfolgt vorzugsweise unter dem Gesichtspunkt der Geruchsfreiheit bzw. -armut der Klebstoffzusammensetzung. Daher wird auf den Einsatz von Methacrylsäure und Methylmethacrylat verzichtet.

Die Klebstoffzusammensetzung kann femer ein oder mehrere Acrylat- oder Methacrylat-Comonomere (C) enthalten. Diese Monomere (C) sind ausgewählt aus Allylacrylat, Allylmethacrylat, 2-Hyddroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Dimethylaminoethylmethacrylat, Glycidylmethacrylat, Piperidylacrylamid, Neopentylmethacrylat, Isobornylmethacrylat, Cyclohexylmethacrylat, tert.-Butylmethacrylat, Tetrahydrofurfurylmethacrylat, Bisphenol-A-bis(hydroxypropylmethacrylat), Maleinsäure-Mono-2-Methacryloyloxyethylester, 7,7,9-Trimethyl-4,13-dioxo-3, 14-dioxa-12-diazahexandecan-1, 16-dioldimethacrylat sowie 3-[-2-(Methacryloyloxi)ethoxycarbonyl]-propionsäure, Phtalsäure-mono-2-methacryloyloxyethylester oder Gemischen davon.

Vorzugsweise enthält die erfindungsgemäße Zusammensetzung 10 bis 70 Gew.-% einer oder mehrerer der Verbindungen (B) und 90 bis 30 Gew.-% einer oder mehrerer der Verbindung (A) und/oder (C) bezogen auf die Gesamtmenge (A)+(B)+(C).

Bei den Verbindungen (A) und (B) sind die bevorzugt, die möglichst wenig Ester-Gruppen enthalten.

Bei den Trockenstoffen handelt es sich um in organischen Lösungsmitteln und Bindemitteln lösliche Metallsalze organischer Säuren, wie sie üblicherweise oxidativ trocknenden Erzeugnissen zugesetzt werden, um den Trockenprozeß zu beschleunigen. Als Metall-Komponente kommen in Frage: Co, Fe, Zr, Mn, Ce, Pb, Zn, Ca und Ba, Y, insbesondere Co, Fe und Zr. Als Säure-Komponente kommen in Frage: Naphthen-, Harz- und aliphatische Carbonsäuren mit 6 bis 10 C-Atomen, insbesondere Ethylhexansäure. Konkret seien folgende Trockenstoffe genannt: Co²⁺-, Fe²⁺- und Zr²⁺-Ethylhexonoat bzw. -naphthenat. Es können sowohl ein als auch mehrere Trockenstoffe eingesetzt werden. Als alleiniger Trockenstoff eignen sich die Salze von Co und Fe, und zwar in Verbindung mit einem Übergangsmetallbeschleuniger oder mit einem anderen Beschleuniger, wie z. B. Cu(acac)₂, p-Toluolsulfonsäurehydrazid. Vorzugsweise wird jedoch eine Mischung von Trockenstoffen verwendet, z. B. Trockenstoffe mit den Metallen: Co/Fe, Co/Zr und Fe/Zr sowie mit Co/Fe/Zr. Auch hier ist ein Zusammenwirken mit einem Übergangsmetallbeschleuniger im Falle von Co/Fe und Co/Zr besonders wirksam.

Die Trockenstoffe werden in einer Konzentration von 0,1 bis 10, insbesondere von 1 bis 6 Gew.-% eingesetzt, bezogen auf die reaktiven Monomere.

Die Trockenstoffe bewirken, daß die Klebstoffe nach 0,5 bis 30, insbesondere 1 bis 3 Tagen an der Grenzfläche zur Luft nicht mehr klebrig sind, und zwar auch bei Filmen mit einer Dicke von weniger als 0,1 mm. Femer spielt das Material des Substrates (z. B. Stahl, Messing oder ABS) keine Rolle. Die Klebstoffe binden wesentlich schneller ab. So beträgt die Topfzeit 0,2 bis 90 Minuten je nach der Zusammensetzung. Die Dauer der Topfzeit ist von verschiedenen Faktoren abhängig, z. B. vom Gehalt an Säure, an Hydroxyalkylmethacrylat und Polyurethanmethacrylaten, insbesondere jedoch von der Art und der Konzentration des Initiators, des Beschleuniger und des Trockenstoffes. Um eine vollständige und schnelle Aushärtung zu bekommen, sollte das Polyurethanmethacrylat auf einem Polyetherol beruhen.

Die Beschleuniger für die freie radikalische Polymerisation der erfindungsgemäßen Zusammensetzungen werden im allgemeinen in Konzentrationen von weniger als 10 Gew.-% verwendet, wobei der bevorzugte Bereich bei etwa 0,1 bis etwa 0,75 Gew.-% liegt. Sulfimide sind eine Gruppe für freie Radikalbeschleuniger, wobei 3-Oxo-2,3-dihydrobenz-[d]-isothiazol-1,1-dioxid bevorzugt ist, das gewöhnlich als Benzoesulfimid oder Saccharin bekannt ist. Tertiäre Amine können ebenfalls als Beschleuniger für die Erzeugung freier Radikale verwendet werden, wobei neben dem Tributylamin das Amin N,N-Dimethyl-p-toluidin und ethoxyliertes para-Toluidin bevorzugt sind. Säuren mit einem pKa-Wert unter 6 sind ebenfalls brauchbar als Beschleuniger. Hydrazinderivate des in der US-PS 4,321,349 (R. Rich) beschriebenen Typs werden hier ebenfalls einbezogen und erweisen sich als sehr wirksam in den erfindungsgemäßen Zusammensetzungen. Das bevorzugte Hydrazin ist neben dem p-Toluolsulfonsäurehydrazid das 1-Acetyl-2-phenylhydrazin. Die brauchbaren Hydrazine weisen im allgemeinen folgende Formel auf:

R¹-NH-NH-CO-R²,

worin R¹ und R² gleich oder verschieden sein können und C₁₋₆- gerad- oder verzweigtkettige Alkylreste, C₁₋₄-Acrylreste und C₁₋₄-Arylreste sind. Die gegebenenfalls vorhandenen Hydrazine liegen in Mengen vor, die ausreichen, um die Polymerisation bei Raumtemperatur zu beschleunigen. Übergangsmetallbeschleuniger sind vorzugsweise ein Salz oder Komplex von Kupfer, Vanadium oder Nickel. Beispiele für diese Beschleuniger sind bevorzugt Kupferoctoat, Kupfemaphthenat, Kupferethylhexanoat und insbesondere Kupferacetat sowie Kupferacetylacetonat. Der Übergangsmetallbeschleuniger soll in dem polymerisierbaren Material löslich sein. Der Übergangsmetallbeschleuniger muß in dem Teil der Klebstoffzusammensetzung enthalten sein, der keinen freien Radikalinitiator oder das Hydrazinderivat enthält. Der jeweilige Teil der Klebstoffzusammensetzung enthält den Übergangsmetallbeschleuniger in einem Anteil von 0,01 bis 3, vorzugsweise von 0,1 bis 1 Gew.-%, bezogen auf die Menge an reaktiven Monomeren.

Die Initiatoren können vom organischen Peroxy- oder Hydroperoxytyp sein, vom Perester- oder Persäuretyp oder ein Persalz. Besonders brauchbar sind die Perester- und Peroxidtypen, worunter t-Butylperbenzoat, t-Butylperoctoat und Cumolhydroperoxid bevorzugt sind. Die Initiatoren werden gewöhnlich in Mengen von etwa 0,1 bis etwa 10 Gew.-% der Zusammensetzung verwendet.

Neben den reaktiven Monomeren, Initiatoren, Beschleunigem und Trockenstoffen kann der erfindungsgemäße Klebstoff wahlweise noch Additive enthalten, um für den jeweiligen Anwendungsfall erwünschte Effekte zu erzielen. Insbesondere seien genannt: Farbstoffe, Inhibitoren, Chelatoren, Viskositätsregler ... Als Farbstoffe seien genannt: Sudanrot 380 und Sudanblau 670. Die Inhibitoren werden gewöhnlich ausgewählt aus der Gruppe von Hydrochinonen, Benzochinonen, Naphthochinonen, Phenanthrachinonen, Anthrachinonen und jeglichen substituierten Verbindungen davon. Außerdem können verschiedene Phenole als Inhibitoren verwendet werden, wobei 2,6-Di-tert.-butyl-4-methylphenol bevorzugt ist. An Chelatoren können genannt werden: Beta-Diketone und das Salz von Ethylendiamintetraessigsäure (EDTA). Sowohl die Inhibitoren als auch die Chelatoren können wirksam in Mengen von etwa 0,1 bis etwa 1 Gew.-% verwendet werden, ohne sich nachteilig auf die Härtungsgeschwindigkeit der polymerisierbaren Klebstoffzusammensetzung auszuwirken.

Verdickungsmittel, Weichmacher, Verdünnungsmittel, Thixotropiermittel und andere Mittel, die auf dem Gebiet üblich sind, können in üblicher Weise und Menge zugesetzt werden, um die gewünschte Viskosität zu ergeben. Emulgatoren können die Verträglichkeit aller Komponenten verbessern.

Die erfindungsgemäßen Klebstoffe werden vorzugsweise in Form von 2 Komponenten im Markt angeboten, um Stabilitätsproblemen bei der Lagerung zu vermeiden. Dabei enthalten beide Teile der Klebstoffzusammensetzung vorzugsweise ähnliche Anteile der reaktiven Monomeren. Die Initiatoren für die freie radikalische Reaktion müssen in einem Teil des Klebstoffes und die Übergangsmetallbeschleuniger und Trockenstoffe in dem anderen Teil gehalten werden. Jeder Teil bleibt stabil bis er mit dem anderen vermischt wird, wodurch die Härtung der Klebstoffzsuammensetzung bewirkt wird. Es können bestimmte Verbindungen, von denen bekannt ist, daß sie die Bildung freier Radikale beschleunigen, in dem gleichen Teil wie die Initiatoren für freie Radikale sein, ohne daß dadurch Stabilitätsprobleme entstehen. Z. B. können Sulfimide und Hydrazinderivate dem Teil, der die Initiatoren enthält, zugesetzt werden. Jedoch dürfen Übergangsmetallsalze und Komplexe, die für die Erfindung erforderlich sind, nicht in den gleichen Teil wie die Initiatoren oder die Hydrazinderivate gegeben werden.

Zwar ist es nicht absolut notwendig, daß äquivalente oder gleiche Menge polymerisierbaren Materials in beiden Teilen vorhanden sind, jedoch ist es empfehlenswert, daß dies der Fall ist, um die Diffusion der verschiedenen Komponenten in jedem Teil zu erleichtern (insbesondere der Initiatoren und der Beschleuniger). Die Rheologie der beiden Teile sollte im wesentlichen ähnlich oder gleich sein, um das wirksame Vermischen des Initiators in einem Teil mit dem Trockenstoff in dem anderen Teil zu fördern und eine gleichmäßige Härtung durch das polymerisierbare Material hindurch zu ermöglichen. Vorzugsweise enthält eine der Komponenten (Komponente A) Bestandteile, wie sie üblicherweise in einem anaeroben Klebstoff enthalten sind, nämlich (Meth)acrylate, Peroxide, Beschleuniger und Amine. Die Komponente (B) enthält Bestandteile, die üblicherweise in einem aerob härtenden Klebstoff enthalten sind, nämlich (Meth)acrylate, Beschleuniger und Trockenstoffe. Durch geeignete Auswahl der einzelnen Bestandteile nach Art und Menge lassen sich Klebstoffe mit folgenden hervorragenden Eigenschaften herstellen:
- Vollständige Aushärtung auch sehr dünner Klebstoffschichten auf unterschiedlichen Substraten (Metalle und Kunststoffe), so daß nach 12 Stunden bis 3 Tagen der Klebstoff auch bei Kontakt mit Luft nicht mehr klebrig ist.
- Schnelle Aushärtung (Topfzeit von ca. 15 Sekunden) bei Verwendung von Kupfer-Verbindungen als Beschleuniger.
- Sehr hohe Klebfestigkeit an Oberflächen von Metallen, wie Stahl, Messing, Kupfer und Aluminium, sei es daß sie glatt sind und nur mit Aceton entfettet wurden, oder chromatiert sind (gelb, oliv und weiß bzw. blau mit einer Säuberung durch Ethanol) oder daß sie korundgestrahlt sind.
- Gute Haftung auf Kunststoffen wie ABS, PVC und PC.
- Weitgehende Geruchsfreiheit.

Aufgrund dieser Eigenschaften ist der erfindungsgemäße Klebstoff vielseitig verwendbar. Insbesondere eignet er sich in der Elektroindustrie, z. B. zur hochfesten und feuchtigkeitsbeständigen Verklebung von Ferriten und chromatierten Hohlplatten (Lautsprecher) bzw. verzinkten Stahlgehäusen (Elektromotoren).

Die Erfindung wird nun im einzelnen erläutert:

### Beispiele

Die Viskosität wurde mittels eines Kegelplattenviskosimeters gemessen.

Die Zugscherfestigkeit (ZSF) wurde nach DIN 53283 gemessen.

### I. Allgemeine Herstellvorschrift:

Die in den Beispielen verwendeten Polyurethandimethacrylate (PUMA) 1 bis 7 werden auf bekannte Weise hergestellt und als 80%ige Lösungen in Hydroxypropylmethacrylat (HPMA) eingesetzt. Gemäß Vergleichsbeispiel 12 der DE 44 41 463 wurden die PUMA 1 und 4 hergestellt aus einem Polyesterdiol und TDI, analog dazu PUMA 3 aus Poly-THF, MDI und HEMA sowie PUMA 2 und 5 aus einem Polyesterdiol, MDI und HPMA und schließlich PUMA 7 aus Polypropylenglykol, MDI und HEMA.

GR 80 ist 3-[-2-(Methacryloyloxi)ethoxycarbonyl]propionsäure. HDK V 15 und Cab-o-Sil 720 sind Kieselsäure (Thixotropiermittel). Bisomer EMP ist Phthalsäure-mono-2-methacryloyloxyethylester.

### II. Zusammensetzung der A-Komponenten in g:

Die Komponenten wurden nacheinander zugegeben (gemischt oder gelöst). Dauer insgesamt ca. 5 Stunden.

| | | |
|---|---|---|
| 1. | 122 | PUMA 2 |
| | 67 | HPMA |
| | 4 | Stabilisator-Lösung |
| | 6 | Trigonox K 80 (Cumolhydroperoxid 80%ig) |
| | 1,5 | Tributylamin |
| | 0,3 | Saccharin (Benzoesäuresulfimid) |
| | 1 | Porophor TSH (p-Toluolsulfonsäurehydrazid) |

| | | |
|---|---|---|
| 2. | 110 | PUMA 2 |
| | 75 | HPMA |
| | 4 | Stabilisator-Lösung |
| | 6 | Trigonox K 80 |
| | 1,5 | Tributylamin |
| | 1 | Porophor TSH |

| | | |
|---|---|---|
| 3. | 110 | PUMA 4 |
| | 75 | HPMA |
| | 4 | Stabilisator-Lösung |
| | 6 | Trigonox K 80 |
| | 1,5 | Tributylamin |
| | 1 | Porophor TSH |
| | 2 | HDK V 15 (SiO₂) |

| | | |
|---|---|---|
| 4. | 21 | PUMA 4 |
| | 95 | PUMA 2 |
| | 70 | HPMA |
| | 4 | Stabilisator-Lösung |
| | 6 | Trigonox K 80 |
| | 1,5 | Tributylamin |
| | 1 | Porophor TSH |

| | | |
|---|---|---|
| 5. | 110 | PUMA3 |
| | 75 | HPMA |
| | 4 | Stabilisatior-Lösung |
| | 6 | CUHP 80 |
| | 1,5 | Tributylamin |
| | 0,366 | Saccharin |
| | 1 | Prophor TSH |
| | 0,02 | Sudanrot 380 |

| | | |
|---|---|---|
| 6. | 110 | PUMA 2 |
| | 75 | HPMA |
| | 4 | Stabilisator-Lösung |
| | 6 | CUHP 80 (Cumolhydroperoxid 80%ig) |
| | 1,5 | Tributylamin |
| | 0,366 | Saccharin |
| | 1,0 | Porophor TSH |

| | | |
|---|---|---|
| 7. | 110 | PUMA 2 |
| | 75 | HPMA |
| | 4 | Stabilisator-Lösung |
| | 6 | CUHP 80 |
| | 1,6 | N,N-Dimethyl-p-toluidin |
| | 0,5 | Saccharin |
| | 1,5 | Porophor TSH |

| | | |
|---|---|---|
| 8. | 110 | PUMA 5 |
| | 75 | HPMA |
| | 4 | Stabilisator-Lösung |
| | 6 | CUHP 80 |
| | 1,5 | Tributylamin |
| | 1,0 | Porophor TSH |
| | 0,02 | Sudanrot 380 |

| | | |
|---|---|---|
| 9. | 110 | PUMA 6 |
| | 75 | HPMA |
| | 4 | Stabilisator-Lösung |
| | 6 | CUHP 80 |
| | 2,0 | Tributylamin |
| | 1,5 | Porophor TSH |
| | 0,02 | Sudanrot 380 |

| | | |
|---|---|---|
| 10. | 110 | PUMA 5 |
| | 75 | HPMA |
| | 4 | Stabilisator-Lösung |
| | 6 | CUHP 80 |
| | 1,5 | Tributylamin |
| | 1,5 | N-Acetyl-N'-phenylhydrazin |
| | 0,02 | Sudanrot 380 |

| | | |
|---|---|---|
| 11. | 110 | PUMA 1 |
| | 75 | HPMA |
| | 4 | Stabilisator-Lösung |
| | 6 | CUHP 80 |
| | 1,5 | Tributylamin |
| | 0,366 | Saccharin |
| | 1,0 | Porophor TSH |
| | 0,02 | Sudanrot 380 |

| | | |
|---|---|---|
| 12. | 134 | PUMA 5 |
| | 100 | HPMA |
| | 5 | Stabilisator-Lösung |
| | 7,5 | CUPH 80 |
| | 1,3 | Tributylamin |
| | 1,3 | N-Acetyl-N'-phenylhydrazin |
| | 0,02 | Sudanrot 380 |

| | | |
|---|---|---|
| 13. | 128 | PUMA 7 |
| | 66 | HPMA |
| | 4 | Stabilisator-Lösung |
| | 6 | CUPH 80 |
| | 1 | Tributylamin |
| | 1,5 | N-Acetyl-N'-phenylhydrazin |
| | 0,02 | Sudanrot 380 |
| | 4,0 | Cab-o-Sil 720 |

| | | |
|---|---|---|
| 14. | 80 | PUMA 5 |
| | 55 | HPMA |
| | 3 | Stabilisator-Lösung |
| | 4 | CUPH 80 |
| | 1 | Tributylamin |
| | 1 | N-Acetyl-N'-phenylhydrazin |
| | 0,01 | Sudanrot 380 |

| | | |
|---|---|---|
| 15. | 55 | PUMA 5 |
| | 37 | HPMA |
| | 2 | Stabilisator-Lösung |
| | 3 | CUPH 80 |
| | 0,8 | Tributylamin |
| | 0,5 | N-Acetyl-N'-phenylhydrazin |
| | 0,01 | Sudanrot 380 |

| | | |
|---|---|---|
| 16. | 55 | PUMA 5 |
| | 37 | HPMA |
| | 2 | Stabilisator-Lösung |
| | 3 | CUPH 80 |
| | 0,8 | Tributylamin |
| | 0,25 | N-Acetyl-N'-phenylhydrazin |
| | 0,01 | Sudanrot 380 |

| | | |
|---|---|---|
| 17. | 106 | PUMA 2 |
| | 36 | HPMA |
| | 27 | Benzylmethacrylat |
| | 4 | Stabilisator-Lösung |
| | 6 | CUPH 80 |
| | 1 | Tributylamin |
| | 1 | N-Acetyl-N'-phenylhydrazin |
| | 0,02 | Sudanrot 380 |

| | | |
|---|---|---|
| 18. | 115 | PUMA 5 |
| | 54 | HPMA |
| | 4 | Stabilisator-Lösung |
| | 6 | CUPH 80 |
| | 0,5 | Tributylamin |
| | 1 | N-Acetyl-N'-phenylhydrazin |
| | 0,02 | Sudanrot 380 |

| | | |
|---|---|---|
| 19. | 134 | PUMA 5 |
| | 100 | HPMA |
| | 5 | Stabilisator-Lösung |
| | 7,5 | CUPH 80 |
| | 1,3 | Tributylamin |
| | 1,3 | N-Acetyl-N'-phenylhydrazin |
| | 0,02 | Sudanrot 380 |
| | 7 | Cab-o-Sil 720 |

| | | |
|---|---|---|
| 20. | 92 | PUMA 5 |
| | 73 | HPMA |
| | 4 | Stabilisator-Lösung |
| | 6 | CUPH 80 |
| | 1 | Tributylamin |
| | 0,1 | N-Acetyl-N'-phenylhydrazin |
| | 0,02 | Sudanrot 380 |
| | 6 | Cab-o-Sil 720 |

| | | |
|---|---|---|
| 21. | 167 | PUMA 5 |
| | 100 | HPMA |
| | 5 | Stabilisator-Lösung |
| | 7,5 | CUPH 80 |
| | 1,3 | Tributylamin |
| | 1,3 | N-Acetyl-N'-phenylhydrazin |
| | 0,02 | Sudanrot 380 |

### III Zusammensetzung der B-Komponenten in g:

| | | |
|---|---|---|
| 1. | 60 | GR 80 |
| | 60 | HPMA |
| | 0,261 | Cu-II-acetylacetonat |
| | 0,366 | Saccharin |
| | 100 | PUMA 2 |

| | | |
|---|---|---|
| 2. | 30 | GR 80 |
| | 60 | HPMA |
| | 0,135 | Cu-II-acetylacetonat |
| | 0,366 | Saccharin |
| | 100 | PUMA 2 |
| | 2 | Octa Soligen Kobalt 6 (Co-Octoat) |
| | 0,352 | Mn-III-acetylacetonat |

| | | |
|---|---|---|
| 3. | 30 | GR 80 |
| | 60 | HPMA |
| | 0,135 | Cu-II-acetylacetonat |
| | 0,366 | Saccharin |
| | 100 | PUMA 2 |
| | 2 | Octa Soligen Kobalt 6 |

| | | |
|---|---|---|
| 4. | 30 | GR 80 |
| | 60 | HPMA |
| | 0,135 | Cu-II-acetylacetonat |
| | 0,366 | Saccharin |
| | 100 | PUMA 4 |
| | 2,5 | Octa Soligen Kobalt 6 |
| | 0,352 | Mn-III-acetylacetonat |
| | 2 | HDK V 15 |

| | | |
|---|---|---|
| 5. | 30 | GR 80 |
| | 60 | HPMA |
| | 0,135 | Cu-II-acetylacetonat |
| | 0,366 | Saccharin |
| | 100 | PUMA 2 |
| | 2 | Octa Soligen Kobalt 6 |
| | 0,37 | Fe-III-acetylacetonat |

| | | |
|---|---|---|
| 6. | 30 | GR 80 |
| | 60 | HPMA |
| | 0,135 | Cu-II-acetylacetonat |
| | 0,366 | Saccharin |
| | 15 | PUMA 4 |
| | 86 | PUMA 2 |
| | 2 | Octa Soligen Kobalt 6 |

| | | |
|---|---|---|
| 7. | 30 | GR 80 |
| | 60 | HPMA |
| | 0,07 | Cu-II-acetylacetonat |
| | 0,194 | Saccharin |
| | 100 | PUMA 2 |
| | 2 | Octa Soligen Kobalt 6 |

| | | |
|---|---|---|
| 8. | 30 | GR 80 |
| | 60 | HPMA |
| | 0,27 | Cu-II-acetylacetonat |
| | 0,5 | Saccharin |
| | 100 | PUMA 2 |
| | 2,5 | Octa Soligen Kobalt 6 |
| | 2,5 | Octa Soligen Zirkonium 6 (Zr-Octoat) |

| | | |
|---|---|---|
| 12. | 30 | GR 80 |
| | 60 | HPMA |
| | 0,135 | Cu-II-acetylacetonat |
| | 2,5 | Octa Soligen Kobalt 6 |
| | 100 | PUMA 2 |

| | | |
|---|---|---|
| 13. | 30 | GR 80 |
| | 60 | HPMA |
| | 0,135 | Cu-II-acetylacetonat |
| | 2,5 | Octa Soligen Mangan 6 (Mn-octoat) |
| | 100 | PUMA 2 |
| | 0,366 | Saccharin |

| | | |
|---|---|---|
| 14. | 30 | GR 80 |
| | 60 | HPMA |
| | 0,091 | Cu-II-acetat |
| | 2,5 | Octa Soligen Mangan 6 |
| | 100 | PUMA 2 |
| | 0,366 | Saccharin |

| | | |
|---|---|---|
| 15. | 100 | HPMA |
| | 0,135 | Cu-II-acetylacetonat |
| | 2,5 | Octa Soligen Kobalt 6 |
| | 100 | PUMA 2 |

| | | |
|---|---|---|
| 17. | 100 | HPMA |
| | 0,366 | Saccharin |
| | 2,5 | Octa Soligen Mangan 6 |
| | 100 | PUMA 2 |
| | 0,125 | Mn-II-acetylacetonat |
| | 0,125 | Co-II-acetylacetonat |

| | | |
|---|---|---|
| 18. | 60 | HPMA |
| | 30 | GR 80 |
| | 0,135 | Cu-II-acetylacetonat |
| | 1,0 | Octa Soligen Kobalt 12 |
| | 1,5 | Octa Soligen Zirkoniuim 6 |
| | 100 | PUMA 2 |
| | 0,02 | Sudanblau 670 |

| | | |
|---|---|---|
| 19. | 60 | HPMA |
| | 30 | GR 80 |
| | 0,135 | Cu-II-acetylacetonat |
| | 1,5 | Octa Soligen Kobalt 12 |
| | 1,0 | Octa Soligen Mangan 6 |
| | 100 | PUMA 2 |
| | 0,02 | Sudanblau 670 |

| | | |
|---|---|---|
| 20. | 60 | HPMA |
| | 30 | GR 80 |
| | 1,5 | Octa Soligen Kobalt 12 |
| | 1,0 | Octa Soligen Cer 6 (Ce-octoat) |
| | 100 | PUMA 2 |
| | 0,02 | Sudanblau 670 |

| | | |
|---|---|---|
| 21. | 60 | HPMA |
| | 30 | GR 80 |
| | 0,135 | Cu-II-acetylacetonat |
| | 1,0 | Octa Soligen Kobalt 12 |
| | 1,0 | Octa Soligen Zirkonium 6 |
| | 1,0 | Octa Soligen Cer 6 |
| | 100 | PUMA 2 |
| | 0,02 | Sudanblau 670 |

| | | |
|---|---|---|
| 22. | 60 | HPMA |
| | 30 | GR 80 |
| | 0,135 | Cu-II-acetylacetonat |
| | 1,0 | Octa Soligen Kobalt 12 |
| | 100 | PUMA 2 |
| | 0,02 | Sudanblau 670 |

| | | |
|---|---|---|
| 23. | 60 | HPMA |
| | 30 | GR 80 |
| | 0,135 | Cu-II-acetylacetonat |
| | 0,366 | Saccharin |
| | 2,5 | Octa Soligen Kobalt 6 |
| | 100 | PUMA 2 |
| | 0,02 | Sudanblau 670 |

| | | |
|---|---|---|
| 24. | 60 | HPMA |
| | 30 | GR 80 |
| | 0,135 | Cu-II-acetylacetonat |
| | 0,366 | Saccharin |
| | 2,5 | Octa Soligen Kobalt 6 |
| | 2,0 | Octa Soligen 173 |
| | | (1,2 % Co-, 7,2 % Ba, 3,2 % Zr-) |
| | 100 | PUMA 5 |
| | 0,02 | Sudanblau 670 |

| | | |
|---|---|---|
| 25. | 60 | HPMA |
| | 30 | GR 80 |
| | 0,135 | Cu-II-acetylacetonat |
| | 0,366 | Saccharin |
| | 2,5 | Octa Soligen Kobalt 6 |
| | 2,0 | Octa Soligen 203 |
| | | (1,2 % Co-, 7,2 % Ba-, 3,2 % Zn) |
| | 100 | PUMA 5 |
| | 0,02 | Sudanblau 670 |

| | | |
|---|---|---|
| 26. | 60 | HPMA |
| | 30 | GR 80 |
| | 0,135 | Cu-II-acetylacetonat |
| | 0,366 | Saccharin |
| | 2,5 | Octa Soligen Kobalt 6 |
| | 2,0 | Octa Soligen 69 (6 % Co-, 9 % Zr) |
| | 100 | PUMA 5 |

| | | |
|---|---|---|
| | 0,02 | Sudanblau 670 |

| | | |
|---|---|---|
| 27. | 60 | HPMA |
| | 30 | GR 80 |
| | 0,135 | Cu-II-acetylacetonat |
| | 0,366 | Saccharin |
| | 2,0 | Octa Soligen Kobalt 12 |
| | 2,0 | Octa Soligen Zirkonium 18 |
| | 100 | PUMA 5 |
| | 0,02 | Sudanblau 670 |

| | | |
|---|---|---|
| 28. | 60 | HPMA |
| | 30 | GR 80 |
| | 0,135 | Cu-II-acetylacetonat |
| | 0,366 | Saccharin |
| | 2,5 | Octa Soligen Kobalt 6 |
| | 4,0 | Octa Soligen 69 (6 % Co-, 9 % Zr) |
| | 100 | PUMA 5 |
| | 0,02 | Sudanblau 670 |

| | | |
|---|---|---|
| 29. | 60 | HPMA |
| | 30 | GR 80 |
| | 0,135 | Cu-II-acetylacetonat |
| | 0,366 | Saccharin |
| | 2,5 | Octa Soligen Kobalt 6 |
| | 8,0 | Octa Soligen 69 |
| | 100 | PUMA 5 |
| | 0,02 | Sudanblau 670 |

| | | |
|---|---|---|
| 30. | 60 | HPMA |
| | 30 | GR 80 |
| | 0,135 | Cu-II-acetylacetonat |
| | 0,366 | Saccharin |
| | 10,0 | Octa Soligen 69 |
| | 100 | PUMA 6 |
| | 0,02 | Sudanblau 670 |

| | | |
|---|---|---|
| 31. | 60 | HPMA |
| | 30 | GR 80 |
| | 0,135 | Cu-II-acetylacetonat |
| | 0,866 | Saccharin |
| | 10,0 | Octa Soligen 69 |
| | 100 | PUMA 6 |
| | 0,02 | Sudanblau 670 |

| | | |
|---|---|---|
| 32. | 60 | HPMA |
| | 30 | GR 80 |
| | 0,135 | Cu-II-acetylacetonat |
| | 1,366 | Saccharin |
| | 10,0 | Octa Soligen 69 |
| | 100 | PUMA 6 |
| | 0,02 | Sudanblau 670 |

| | | |
|---|---|---|
| 33. | 60 | HPMA |
| | 30 | HEMAM |
| (Maleinsäure-mono-2-methacryloyloxyethylester) | | |
| | 0,135 | Cu-II-acetylacetonat |
| | 1,366 | Saccharin |
| | 10,0 | Octa Soligen 69 |
| | 100 | PUMA 6 |
| | 0,02 | Sudanblau 670 |

| | | |
|---|---|---|
| 34. | 60 | HPMA |
| | 30 | GR 80 |
| | 0,135 | Cu-II-acetylacetonat |
| | 2,5 | Octa Soligen Kobalt 6 |
| | 100 | PUMA 1 |
| | 0,02 | Sudanblau 670 |

| | | |
|---|---|---|
| 35. | 34 | GR 80 |
| | 80 | HPMA |
| | 0,005 | Solingen Kupfer 8 |
| | 1,5 | Saccharin |
| | 124 | PUMA 2 |
| | 5,6 | Octa Soligen Trockner 69 (Co-/Zr-octoat) |
| | 5,6 | Octa Soligen Eisen 7/8 |
| | 0,02 | Sudanblau |

| | | |
|---|---|---|
| 36. | 34 | GR 80 |
| | 80 | HPMA |
| | 0,125 | Solingen Kupfer 8 |
| | 1,5 | Saccharin |
| | 124 | PUMA 2 |
| | 5,6 | Octa Soligen Trockner 69 (Co-/Zr-octoat) |
| | 5,6 | Octa Soligen Eisen 7/8 |
| | 0,02 | Sudanblau |

| | | |
|---|---|---|
| 37. | 26 | GR 80 |
| | 51 | HPMA |
| | 1,15 | Saccharin |
| | 97 | PUMA 2 |
| | 4,8 | Octa Soligen Trockner 69 (Co-/Zr-octoat) |
| | 0,02 | Sudanblau |

| | | |
|---|---|---|
| 38. | 26 | GR 80 |
| | 51 | HPMA |
| | 0,36 | Solingen Kupfer 8 |
| | 1,15 | Saccharin |
| | 97 | PUMA 2 |
| | 4,8 | Octa Soligen Trockner 69 (Co-/Zr-octoat) |
| | 0,02 | Sudanblau |

| | | |
|---|---|---|
| 39. | 34 | Bisomer EMP |
| | 48 | HPMA |
| | 1,1 | Saccharin |
| | 89 | PUMA 2 |
| | 4 | Octa Soligen Trockner 69 (Co-/Zr-octoat) |
| | 4 | Octa Soligen Eisen 7/8 |
| | 0,02 | Sudanblau |

| | | |
|---|---|---|
| 40. | 34 | Bisomer EMP |
| | 48 | HPMA |
| | 0,36 | Solingen Kupfer 8 |
| | 1,1 | Saccharin |
| | 89 | PUMA 2 |
| | 4 | Octa Soligen Trockner 69 (Co-/Zr-octoat) |
| | 4 | Octa Soligen Eisen 7/8 |
| | 0,02 | Sudanblau |

| | | |
|---|---|---|
| 41. | 34 | Bisomer EMP |
| | 48 | HPMA |
| | 1,1 | Saccharin |
| | 89 | PUMA 2 |
| | 4 | Octa Soligen Trockner 69 (Co-/Zr-octoat) |
| | 4 | Octa Soligen Eisen 7/8 |
| | 0,02 | Sudanblau |

| | | |
|---|---|---|
| 42. | 34 | Bisomer EMP |
| | 48 | HPMA |
| | 0,36 | Solingen Kupfer 8 |
| | 1,1 | Saccharin |
| | 89 | PUMA 5 |
| | 4 | Octa Soligen Trockner 69 (Co-/Zr-octoat) |
| | 4 | Octa Soligen Eisen 7/8 |
| | 0,02 | Sudanblau |

| | | |
|---|---|---|
| 43. | 45 | HEMAM |
| | 28 | HPMA |
| | 1,26 | Saccharin |
| | 102 | PUMA 2 |
| | 4,8 | Octa Soligen Trockner 69 (Co-/Zr-octoat) |
| | 0,02 | Sudanblau |

| | | |
|---|---|---|
| 44. | 45 | HEMAM |
| | 28 | HPMA |
| | 0,36 | Solingen Kupfer 8 |
| | 1,26 | Saccharin |
| | 102 | PUMA 2 |
| | 4,8 | Octa Soligen Trockner 69 (Co-/Zr-octoat) |
| | 0,02 | Sudanblau |

| | | |
|---|---|---|
| 45. | 24 | GR 80 |
| | 48 | HPMA |
| | 1,1 | Saccharin |
| | 98 | PUMA 2 |
| | 4 | Octa Soligen Trockner 69 (Co-/Zr-octoat) |
| | 0,02 | Sudanblau |
| | 5,4 | Cab-o-Sil 720 |

| | | |
|---|---|---|
| 46. | 24 | GR 80 |
| | 48 | HPMA |
| | 98 | PUMA 2 |
| | 4 | Octa Soligen Trockner 69 (Co-/Zr-octoat) |
| | 0,02 | Sudanblau |
| | 5,4 | Cab-o-Sil 720 |

| | | |
|---|---|---|
| 47. | 43 | GR 80 |
| | 42 | HPMA |
| | 0,013 | Solingen Kupfer 8 |
| | 1,26 | Saccharin |
| | 85 | PUMA 7 |
| | 4,8 | Octa Soligen Trockner 69 (Co-/Zr-octoat) |
| | 0,02 | Sudanblau |
| | 4 | Cab-o-Sil 720 |

| | | |
|---|---|---|
| 48. | 34 | GR 80 |
| | 80 | HPMA |
| | 0,005 | Solingen Kupfer 8 |
| | 1,5 | Saccharin |
| | 149 | PUMA 2 |
| | 5,6 | Octa Soligen Trockner 69 (Co-/Zr-octoat) |
| | 5,6 | Octa Soligen Eisen 7/8 |
| | 0,02 | Sudanblau |

IV A/B-Klebstoffsysteme (Kombinationen und geprüfte Verklebungen): Mischungsverhältnis A:B = 1:1; Auftragsmenge: 50 bis 80 mg/250 mm² Vergleichsbeispiel 1:

### 1A / 1B nicht Tackfrei nach 72 h

Gelzeit bzw. Topfzeit je zwei g: 30 s 28 °C (= 30 Sekunden bei 28°C) Zugscherfestigkeit (N/mm²) nach 12 h RT oder 12 RT ( = nach 12 Stunden bei 20 bis 22 °C) Stahl/Stahl (korundgestrahlt): 26,3
Al/Al (korundgestrahlt): 7,2

### 1. 2A/2B

Gelzeit bzw. Topfzeit je zwei g: 120 s 28 °C (= 120 Sekunden bei 28°C) Zugscherfestigkeit (N/mm²) nach 72 h RT oder 72 RT (= nach 72 Stunden bei 20 bis 22 °C)
Stahl/Stahl (korundgestrahlt): 29,6
Stahl/Stahl (glatt): 30,7
Messing/Messing (glatt): 17,8
V₂A/V₂A (glatt): 28,0
PVC/PVC (glatt): 5,7 (MB) (MB = Materialbruch)
Al/Al (korundgestrahlt): 26,6
Al/Al (glatt): 15,8
Cu/Cu (glatt): 16,4
ABS/ABS (glatt): 5,6 (MB)
GFK/GFK (glatt): 4,1
Zugscherfestigkeit (N/mm₂) nach 3 h 80 °C

Stahl/Stahl (korundgestrahlt): 38,1
Stahl/Stahl (glatt): 34,3
PC/PC (glatt): 4,2
PVC/PVC (glatt): 8,7 (MB)
Al/Al (korundgestrahlt): 32,0
Al/Al (glatt): 21,7
ABS/ABS (glatt): 8,3 (MB)
GFK/GFK (glatt): 6,2

### 2. 2A/3B

Gelzeit bzw. Topfzeit je zwei g: 90 s 25 °C
Zugscherfestigkeit (N/mm₂) nach 72 h RT
Stahl/Stahl (korundgestrahlt): 29,9
Stahl/Stahl (glatt): 29,9
GFK/GFK (glatt): 3,1
Al/Al (korundgestrahlt): 31,7
Al/Al (glatt): 16,7

### 3. 4A/4B

Gelzeit bzw. Topfzeit je zwei g: 150 s 25 °C
Zugscherfestigkeit (N/mm₂) nach 1 h 90 °C
Stahl/Stahl (korundgestrahlt): 14,4
Stahl/Stahl (glatt): 13,4
Messing/Messing (glatt): 10,7
V₂A/V₂A (glatt): 9,5
Al/Al (korundgestrahlt): 15,7
Al/Al (glatt): 14,1
Cu/Cu (glatt): 13,1

### 4. 1A/5B

Zugscherfestigkeit (N/mm²) nach 24 h RT
Stahl/Stahl (korundgestrahlt): 34,1
Stahl/Stahl (glatt): 25,4
Al/Al (korundgestrahlt): 29,1
Al/Al (glatt): 11,5

### 5. 4A/6B

Gelzeit bzw. Topfzeit je zwei g: 60 s 25 °C
Zugscherfestigkeit (N/mm²) nach 12 RT
Stahl/Stahl (korundgestrahlt): 30,3
Stahl/Stahl (glatt): 29
Messing/Messing (glatt): 18,3
V₂A/V₂A (glatt): 21,4
Al/Al (korundgestrahlt): 25,2
Al/Al (glatt): 12,2
Cu/Cu (glatt): 16,4

### 6. 2A/7B

Gelzeit bzw. Topfzeit je zwei g: 140 s 25 °C
Zugscherfestigkeit (N/mm²) nach 1 h 90 °C
Stahl/Stahl (glatt): 31,2
Al/Al (glatt): 13,8

### 7. 2A/8B

Gelzeit bzw. Topfzeit je zwei g: 30 s 28 °C
Zugscherfestigkeit (N/mm²) nach 12 RT
Stahl/Stahl (korundgestrahlt): 34,8
Stahl/Stahl (glatt): 32,2
Messing/Messing (glatt): 15,7
V₂A/V₂A (glatt): 24,9
Al/Al (korundgestrahlt): 30,5
Al/Al (glatt): 11,2
Cu/Cu (glatt): 17,1

### 11. 2A/13B

Gelzeit bzw. Topfzeit je zwei g: nicht geprüft
Zugscherfestigkeit (N/mm²) nach 12 RT
Stahl/Stahl (korundgestrahlt): 30,3
Stahl/Stahl (glatt): 22,3
Messing/Messing (glatt): 10,5
Cu/Cu (glatt): 16,8
AI/AI (korundgestrahlt): 29,0
AI/AI (glatt): 5,0
V₂A/V₂A (glatt): 16,0

### 12. 2A/14B

Gelzeit bzw. Topfzeit je zwei g: 90 s 25 °C
Zugscherfestigkeit (N/mm²) nach 12 RT
Stahl/Stahl (korundgestrahlt): 20,9
Stahl/Stahl (glatt): 19,6
Messing/Messing (glatt): 14,3
Cu/Cu (glatt): 15,8
Al/Al (korundgestrahlt): 20,0
Al/Al (glatt): 4,4
V₂A/V₂A (glatt): 21,6

### 13. 6A/12B

Gelzeit bzw. Topfzeit je zwei g: 55 s 28 °C
Zugscherfestigkeit (N/mm²) nach 12 RT
Stahl/Stahl (korundgestrahlt): 31,7
Stahl/Stahl (glatt): 28,0
Messing/Messing (glatt): 22,7
Cu/Cu (glatt): 17,7
Al/Al (korundgestrahlt): 27,9
Al/Al (glatt): 13,9
V₂A/V₂A (glatt): 26,3

### 14. 6A/3B

Gelzeit bzw. Topfzeit je zwei g: 45 s 25 °C
Zugscherfestigkeit (N/mm²) nach 72 RT
Stahl/Stahl (korundgestrahlt): 34,3
Stahl/Stahl (glatt): 30,7
Messing/Messing (glatt): 23,8
Cu/Cu (glatt): 14,0
Al/Al (korundgestrahlt): 27,6
Al/Al (glatt): 14,0
V₂A/V₂A (glatt): 21,5

### 15. 6A/15B

Gelzeit bzw. Topfzeit je zwei g: 30 s 25 °C
Zugscherfestigkeit (N/mm²) nach 12 RT
Stahl/Stahl (korundgestrahlt): 33,3
Stahl/Stahl (glatt): 26,8
Messing/Messing (glatt): 6,5
Cu/Cu (glatt): 11,1
Al/Al (korundgestrahlt): 21,5
Al/Al (glatt): 4,3
V₂A/V₂A (glatt): 7,1

### 17. 6A/17B

Gelzeit bzw. Topfzeit je zwei g: 900 s 29 °C
Zugscherfestigkeit (N/mm²) nach 12 RT
Stahl/Stahl (korundgestrahlt): 31,2
Stahl/Stahl (glatt): 12,3
Messing/Messing (glatt): 5,4
Cu/Cu (glatt): 8,8
Al/Al (korundgestrahlt): 20,6
Al/Al (glatt): 4,6
V₂A/V₂A (glatt): 10,0
ABS/ABS (glatt): 4,9

### 18. 7A/3B

Gelzeit bzw. Topfzeit je zwei g: 15 s 28 °C
Zugscherfestigkeit (N/mm²) nach 12 RT
Stahl/Stahl (korundgestrahlt): 29,9
Stahl/Stahl (glatt): 21,5
Messing/Messing (glatt): 17,0
Cu/Cu (glatt): 13,5
Al/Al (korundgestrahlt): 22,7
Al/Al (glatt): 7,3
V₂A/V₂A (glatt): 15,7

### 19. 5A/18B

Gelzeit bzw. Topfzeit je zwei g: 45 s 29 °C
Zugscherfestigkeit (N/mm²) nach 12 RT
Stahl/Stahl (korundgestrahlt): 34,7
Stahl/Stahl (glatt): 27,6
Messing/Messing (glatt): 18,1
Cu/Cu (glatt): 13,6
Al/Al (korundgestrahlt): 25,4
Al/Al (glatt): 19,6
V₂A/V₂A (glatt): 26,6
ABS/ABS (glatt): 6,6

### 20. 5A/19B

Gelzeit bzw. Topfzeit je zwei g: 50 s 29 °C
Zugscherfestigkeit (N/mm²) nach 12 RT
Stahl/Stahl (korundgestrahlt): 37,1
Stahl/Stahl (glatt): 31,5
Messing/Messing (glatt): 21,4
Cu/Cu (glatt): 13,1
Al/Al (korundgestrahlt): 29,3
Al/Al (glatt): 15,1
V₂A/V₂A (glatt): 18,2
ABS/ABS (glatt): 6,1

### 21. 5A/20B

Gelzeit bzw. Topfzeit je zwei g: 55 s 29 °C
Zugscherfestigkeit (N/mm²) nach 12 RT
Stahl/Stahl (korundgestrahlt): 29,2
Stahl/Stahl (glatt): 28,2
Messing/Messing (glatt): 25,3
Cu/Cu (glatt): 14,5
Al/Al (korundgestrahlt): 29,9
Al/Al (glatt): 15,6
V₂A/V₂A (glatt): 21,6
ABS/ABS (glatt): 4,1

### 22. 5A/21B

Gelzeit bzw. Topfzeit je zwei g: 55 s 29 °C
Zugscherfestigkeit (N/mm²) nach 72 RT
Stahl/Stahl (korundgestrahlt): 31,3
Stahl/Stahl (glatt): 28,3
Messing/Messing (glatt): 19,1
Cu/Cu (glatt): 13,4
Al/Al (korundgestrahlt): 30,0
Al/Al (glatt): 14,0
V₂A/V₂A (glatt): 22,9
ABS/ABS (glatt): 4,4

### 23. 5A/22B

Gelzeit bzw. Topfzeit je zwei g: 55 s 29 °C
Zugscherfestigkeit (N/mm²) nach 12 RT
Stahl/Stahl (korundgestrahlt): 24,5
Stahl/Stahl (glatt): 30,5
Messing/Messing (glatt): 25,5
Cu/Cu (glatt): 14,3
Al/Al (korundgestrahlt): 26,7
Al/Al (glatt): 16,5
V₂A/V₂A (glatt): 25,3
ABS/ABS (glatt): 4,4

### 24. 8A/23B

Gelzeit bzw. Topfzeit je zwei g: 80 s 22 °C
Zugscherfestigkeit (N/mm²) nach 12 RT
Messing/Messing (glatt): 13,9
Cu/Cu (glatt): 15,8
Al/Al (korundgestrahlt): 13,4
Al/Al (glatt): 13,5
V₂A/V₂A (glatt): 12,7

### 25. 8A/24B

Gelzeit bzw. Topfzeit je zwei g: 85 s 21 °C
Zugscherfestigkeit (N/mm²) nach 72 RT
Messing/Messing (glatt): 13,4
Cu/Cu (glatt): 14,5
Al/Al (glatt): 11,5
V₂A/V₂A (glatt): 13,6

### 26. 8A/25B

Gelzeit bzw. Topfzeit je zwei g: 80 s 21 °C
Zugscherfestigkeit (N/mm²) nach 72 RT
Messing/Messing (glatt): 15,6
Cu/Cu (glatt): 13,2
Al/Al (glatt): 10,0
V₂A/V₂A (glatt): 13,3

### 27. 8A/26B

Gelzeit bzw. Topfzeit je zwei g: 75 s 23 °C
Zugscherfestigkeit (N/mm²) nach 72 RT
Messing/Messing (glatt): 14,5
Cu/Cu (glatt): 14,1
Al/Al (glatt): 10,9
V₂A/V₂A (glatt): 15,3

### 28. 8A/27B

Gelzeit bzw. Topfzeit je zwei g: 80 s 21 °C
Zugscherfestigkeit (N/mm²) nach 72 RT
Messing/Messing (glatt): 15,4
Cu/Cu (glatt): 13,9
Al/Al (glatt): 10,9
V₂A/V₂A (glatt): 13,4

### 29. 8A/28B

Gelzeit bzw. Topfzeit je zwei g: 90 s 22 °C
Zugscherfestigkeit (N/mm²) nach 72 RT
Messing/Messing (glatt): 15,5
Cu/Cu (glatt): 10,8
Al/Al (glatt): 9,9
V₂A/V₂A (glatt): 12,8

### 30. 8A/29B

Gelzeit bzw. Topfzeit je zwei g: 100 s 21 °C
Zugscherfestigkeit (N/mm²) nach 72 RT
Messing/Messing (glatt): 11,5
Cu/Cu (glatt): 12,3
Al/Al (glatt): 10,5
V₂A/V₂A (glatt): 13,5

### 31. 8A/30B

Gelzeit bzw. Topfzeit je zwei g: 90 s 22 °C
Zugscherfestigkeit (N/mm²) nach 72 RT
Messing/Messing (glatt): 13,8
Cu/Cu (glatt): 15,3
Al/Al (glatt): 12,3
V₂A/V₂A (glatt): 13,5

### 32. 8A/31B

Gelzeit bzw. Topfzeit je zwei g: 60 s 22 °C
Zugscherfestigkeit (N/mm²) nach 12 RT
Stahl/Stahl (glatt): 15,3
Messing/Messing (glatt): 16,8
Cu/Cu (glatt): 12,6
Al/Al (glatt): 14,4
V₂A/V₂A (glatt): 14,0

### 33. 8A/32B

Gelzeit bzw. Topfzeit je zwei g: 45 s 22 °C
Zugscherfestigkeit (N/mm²) nach 12 RT
Stahl/Stahl (glatt): 14,5
Messing/Messing (glatt): 15,1
Cu/Cu (glatt): 15,0
Al/Al (glatt): 16,6
V₂A/V₂A (glatt): 13,6

### 34. 9A/31B

Gelzeit bzw. Topfzeit je zwei g: 40 s 22 °C
Zugscherfestigkeit (N/mm²) nach 12 RT
Stahl/Stahl (glatt): 15,7
Messing/Messing (glatt): 14,4
Cu/Cu (glatt): 14,6
Al/Al (glatt): 14,6
V₂A/V₂A (glatt): 14,5

### 35. 9A/32B

Gelzeit bzw. Topfzeit je zwei g: 40 s 22 °C
Zugscherfestigkeit (N/mm²) nach 12 RT
Stahl/Stahl (glatt): 12,9
Messing/Messing (glatt): 15,3
Cu/Cu (glatt): 12,7
Al/Al (glatt): 12,8
V₂A/V₂A (glatt): 14,7

### 36. 9A/30B

Gelzeit bzw. Topfzeit je zwei g: 60 s 22 °C Zugscherfestigkeit (N/mm²) nach 12 RT
Stahl/Stahl (glatt): 15,4
Messing/Messing (glatt): 13,1
Cu/Cu (glatt): 13,3
Al/Al (glatt): 15,3
V₂A/V₂A (glatt): 13,3

### 37. 10A/31B

Gelzeit bzw. Topfzeit je zwei g: 30 s 21 °C
Zugscherfestigkeit (N/mm²) nach 12 RT
Stahl/Stahl (glatt): 14,3
Messing/Messing (glatt): 17,4
Cu/Cu (glatt): 10,0
Al/Al (glatt): 13,5
V₂A/V₂A (glatt): 11,1

### 38. 10A/32B

Gelzeit bzw. Topfzeit je zwei g: 25 s 21 °C
Zugscherfestigkeit (N/mm²) nach 12 RT
Stahl/Stahl (glatt): 11,3
Messing/Messing (glatt): 14,5
Cu/Cu (glatt): 14,6
Al/Al (glatt): 13,0
V₂A/V₂A (glatt): 10,8

### 39. 10A/30B

Gelzeit bzw. Topfzeit je zwei g: 45 s 21 °C
Zugscherfestigkeit (N/mm²) nach 12 RT
Stahl/Stahl (glatt): 16,9
Messing/Messing (glatt): 15,8
Cu/Cu (glatt): 13,1
Al/Al (glatt): 14,6
V₂A/V₂A (glatt): 12,1

### 40. 10A/33B

Gelzeit bzw. Topfzeit je zwei g: 25 s 21 °C
Zugscherfestigkeit (N/mm²) nach 12 RT
Stahl/Stahl (glatt): 12,4
Messing/Messing (glatt): 14,7
Cu/Cu (glatt): 12,9
Al/Al (glatt): 13,5
V₂A/V₂A (glatt): 14,5

### 41. 11A/34B

Gelzeit bzw. Topfzeit je zwei g: 90 s 21 °C
Zugscherfestigkeit (N/mm²) nach 12 RT
Stahl/Stahl (glatt): 19,8
Messing/Messing (glatt): 13,1
Cu/Cu (glatt): 16,9
Al/Al (glatt): 11,5
V₂A/V₂A (glatt): 17,7

### 42. 12A/35B

Gelzeit bzw. Topfzeit je zwei g: 120 s 20 °C
Zugscherfestigkeit (N/mm²) nach 72 h RT

| | |
|---|---|
| Stahl/Stahl (korundgestrahlt): 31,0 | Al/Al (korundgestrahlt): 27,7 |
| Stahl/Stahl (glatt): 28,5 | Al/Al /glatt): 21,7 |
| Messing/Messing (glatt): 31,7 | Cu/Cu (glatt): 19,5 |
| V₂A/V₂A (glatt): 32,7 | |

### 43. 12A/36B

Gelzeit bzw. Topfzeit je zwei g: 30 s 20 °C
Zugscherfestigkeit (N/mm²) nach 72 h RT

| | |
|---|---|
| Stahl/Stahl (korundgestrahlt): 30,5 | Al/Al (korundgestrahlt): 26,7 |
| Stahl/Stahl (glatt):30,0 | Al/Al /glatt): 21,5 |
| Messing/Messing (glatt): 24,8 | Cu/Cu (glatt): 20,4 |
| V₂A/V₂A (glatt): 28,9 | |

### 44. 13A/47B

Gelzeit bzw. Topfzeit je zwei g: 120 s 20 °C
Zugscherfestigkeit (N/mm²) nach 72 h RT

| | |
|---|---|
| Stahl/Stahl (korundgestrahlt): 17,6 | Al/Al (korundgestrahlt): 14,0 |
| Stahl/Stahl (glatt): 14,6 | Al/Al /glatt): 12,4 |
| Messing/Messing (glatt): 14,5 | Cu/Cu (glatt): 13,1 |
| V₂A/V₂A (glatt): 11,3 | |

### 45. 14A/30B

Gelzeit bzw. Topfzeit je zwei g:_s 20 °C
Zugscherfestigkeit (N/mm²) nach 72 h RT

| | |
|---|---|
| Stahl/Stahl (korundgestrahlt): _ | Al/Al (korundgestrahlt): _ |
| Stahl/Stahl (glatt):18,2 | Al/Al /glatt): 15,7 |
| Messing/Messing (glatt): 16,2 | Cu/Cu (glatt): 15,7 |
| V₂A/V₂A (glatt): 13,8 | |

### 46. 15A/30B

Gelzeit bzw. Topfzeit je zwei g:_s 20 °C
Zugscherfestigkeit (N/mm²) nach 72 h RT

| | |
|---|---|
| Stahl/Stahl (korundgestrahlt): _ | Al/Al (korundgestrahlt): _ |
| Stahl/Stahl (glatt): 17,0 | Al/Al /glatt): 16,2 |
| Messing/Messing (glatt): 14,5 | Cu/Cu (glatt): 13,2 |
| V₂A/V₂A (glatt): 14,9 | |

### 47. 16A/30B

Gelzeit bzw. Topfzeit je zwei g: 90 s 20 °C
Zugscherfestigkeit (N/mm²) nach 72 h RT

| | |
|---|---|
| Stahl/Stahl (korundgestrahlt):_ | Al/Al (korundgestrahlt): _ |
| Stahl/Stahl (glatt): 17,8 | Al/Al /glatt): 15,7 |
| Messing/Messing (glatt): 15,1 | Cu/Cu (glatt): 12,9 |
| V₂A/V₂A (glatt): 14,9 | |

### 48. 17A/37B

Gelzeit bzw. Topfzeit je zwei g: 540 s 22 °C
Zugscherfestigkeit (N/mm²) nach 72 h RT

| | |
|---|---|
| Stahl/Stahl (korundgestrahlt): 31,2 | Al/Al (korundgestrahlt): 25,4 |
| Stahl/Stahl (glatt): 26,8 | Al/Al /glatt): 14,2 |
| Messing/Messing (glatt): 20,4 | Cu/Cu (glatt): 15,0 |
| V₂A/V₂A (glatt): 24,1 | |

### 49. 17A/38B

Gelzeit bzw. Topfzeit je zwei g: 30 s 22 °C
Zugscherfestigkeit (N/mm²) nach 72 h RT

| | |
|---|---|
| Stahl/Stahl (korundgestrahlt): 31,7 | Al/Al (korundgestrahlt): 25,7 |
| Stahl/Stahl (glatt): 20,6 | Al/Al /glatt): 14,4 |
| Messing/Messing (glatt): 19,1 | Cu/Cu (glatt): 16,5 |
| V₂A/V₂A (glatt): 21,3 | |

### 50. 12A/39B

Gelzeit bzw. Topfzeit je zwei g: 165 s 22 °C
Zugscherfestigkeit (N/mm²) nach 72 h RT

| | |
|---|---|
| Stahl/Stahl (korundgestrahlt): 26,8 | Al/Al (korundgestrahlt): 23,6 |
| Stahl/Stahl (glatt):22,6 | Al/Al /glatt): 8,0 |
| Messing/Messing (glatt): 19,4 | Cu/Cu (glatt): 13,1 |
| V₂A/V₂A (glatt): 21,1 | |

### 51. 12A/40B

Gelzeit bzw. Topfzeit je zwei g: 50 s 22 °C
Zugscherfestigkeit (N/mm²) nach 72 h RT

| | |
|---|---|
| Stahl/Stahl (korundgestrahlt): 28,7 | Al/Al (korundgestrahlt): 26,5 |
| Stahl/Stahl (glatt): 19,5 | Al/Al /glatt): 4,1 |
| Messing/Messing (glatt): 20,0 | Cu/Cu (glatt): 15,0 |
| V₂A/V₂A (glatt): 20,1 | |

### 52. 12A/41B

Gelzeit bzw. Topfzeit je zwei g: 175 s 22 °C
Zugscherfestigkeit (N/mm²) nach 72 h RT

| | |
|---|---|
| Stahl/Stahl (korundgestrahlt): 21,3 | Al/Al (korundgestrahlt): 18,7 |
| Stahl/Stahl (glatt): 18,8 | Al/Al /glatt): 15,0 |
| Messing/Messing (glatt): 17,5 | Cu/Cu (glatt): 15,1 |
| V₂A/V₂A (glatt): 17,9 | |

### 53. 12A/42B

Gelzeit bzw. Topfzeit je zwei g: 45 s 22 °C
Zugscherfestigkeit (N/mm²) nach 72 h RT

| | |
|---|---|
| Stahl/Stahl (korundgestrahlt): 20,5 | Al/Al (korundgestrahlt): 18,5 |
| Stahl/Stahl (glatt): 17,5 | Al/Al /glatt): 8,1 |
| Messing/Messing (glatt): 19,2 | Cu/Cu (glatt): 16,9 |
| V₂A/V₂A (glatt): 15,1 | |

### 54. 18A/43B

Gelzeit bzw. Topfzeit je zwei g: 900 s 21 °C
Zugscherfestigkeit (N/mm²) nach 72 h RT

| | |
|---|---|
| Stahl/Stahl (korundgestrahlt): 24,3 | A1/A1 (korundgestrahlt): 20,8 |
| Stahl/Stahl (glatt): 22,2 | A1/A1 /glatt): 16,1 |
| Messing/Messing (glatt): 16,4 | Cu/Cu (glatt): 18,3 |
| V₂A/V₂A (glatt): 18,6 | |

### 55. 18A/44B

Gelzeit bzw. Topfzeit je zwei g: 30 s 21 °C
Zugscherfestigkeit (N/mm²) nach 72 h RT

| | |
|---|---|
| Stahl/Stahl (korundgestrahlt): 24,3 | Al/Al (korundgestrahlt): 22,2 |
| Stahl/Stahl (glatt): 23,2 | Al/Al /glatt): 15,2 |
| Messing/Messing (glatt): 18,3 | Cu/Cu (glatt): 16,8 |
| V₂A/V₂A (glatt): 18,6 | |

### 56. 19A/45B

Gelzeit bzw. Topfzeit je zwei g: 1200 s 20 °C
Zugscherfestigkeit (N/mm²) nach 72 h RT

| | |
|---|---|
| Stahl/Stahl (korundgestrahlt): 29,0 | Al/Al (korundgestrahlt): 24,0 |
| Stahl/Stahl (glatt): 24,8 | Al/Al /glatt): 20,8 |
| Messing/Messing (glatt): 25,3 | Cu/Cu (glatt): 18,2 |
| V₂A/V₂A (glatt): 24,2 | |

### 57. 20A/46B

Gelzeit bzw. Topfzeit je zwei g: 60 - 70 min. 20 °C
Zugscherfestigkeit (N/mm²) nach 72 h RT

| | |
|---|---|
| Stahl/Stahl (korundgestrahlt): 29,3 | Al/Al (korundgestrahlt): 19,9 |
| Stahl/Stahl (glatt): 26,4 | Al/Al /glatt): 21,6 |
| Messing/Messing (glatt): 23,8 | Cu/Cu (glatt): _ |
| V₂A/V₂A (glatt): 22,1 | |

### 58. 21A/48B

Gelzeit bzw. Topfzeit je zwei g: 80 s 20 °C
Zugscherfestigkeit (N/mm²) nach 72 h RT

| | |
|---|---|
| Stahl/Stahl (korundgestrahlt): _ | Al/Al (korundgestrahlt): _ |
| Stahl/Stahl (glatt): 25,8 | Al/Al /glatt): 19,1 |
| Messing/Messing (glatt): 22,8 | Cu/Cu (glatt): 18,4 |
| V₂A/V₂A (glatt): 20,3 | |

Sämtliche geprüften A/B-Klebstoffsysteme verlieren ihre Oberflächenklebrigkeit, sofern nicht anders angegeben in Abhängigkeit der Zusammensetzung bzw. der Substrate sowie der Umgebungstemperatur nach 12 bis 336 Stunden.

Alle A/B-Klebstoffsysteme sind weitgehend geruchsfrei.

## Patentansprüche

1. Zweikomponentige aerob härtende Klebstoffzusammensetzung bestehend aus
a) einer ersten Komponente enthaltend
- mindestens ein Polyurethan(meth)acrylat sowie
- ggf. weitere Acrylate bzw. Methacrylate mit einer Siedetemperatur von mehr als 120 °C bei Normaldruck
- einen radikalbildenden Initiator
- mindestens einen Übergangsmetall-freien Beschleuniger
b) einer zweiten Komponente enthaltend
- mindestens ein Polyurethan(meth)acrylat sowie
- ggf. weitere Acrylate bzw. Methacrylate mit einer Siedetemperatur von mehr als 120 °C bei Normaldruck und
- entweder eine Trockenstoffmischung enthaltend mindestens zwei lösliche Metallsalze organischer Säuren und
- ggf. Übergangsmetallbeschleuniger
- oder einen Trockenstoff und einen Übergangsmetallbeschleuniger, wobei Trockenstoff und Übergangsmetallbeschleuniger Verbindungen unterschiedlicher Metalle sind.

2. Klebstoff nach Anspruch 1, dadurch gekennzeichnet, daß der Initiator ein Hydroperoxid ist.

3. Klebstoff nach Anspruch 1 oder 2, dadurch gekennzeichnet, daß der übergangsmetallfreie Beschleuniger eine Verbindung aus folgenden Stoffklassen ist: Sulfimide, Hydrazinderivate, tert. Amine und der Übergangsmetall-Beschleuniger ein Kupfer-Salz oder-Komplex ist.

4. Klebstoff nach mindestens einem der Ansprüche 1 bis 3, dadurch gekennzeichnet, daß der/die Trockenstoff(e) eine Metallseife mit Co, Fe oder Zr als Metallkomponente und mit einer aliphatischen Carbonsäure mit 6 bis 10 C-Atomen als Carbonsäurekomponente ist (sind).

5. Klebstoff nach mindestens einem der Ansprüche 1 bis 4, dadurch gekennzeichnet, daß Gemische von Acrylaten bzw. Methacrylaten verwendet werden, wobei der alkoholische Rest jeweils einen Hydroxyl-, Carbonsäure- oder Urethan-Gruppe enthält.

6. Klebstoff nach mindestens einem der Ansprüche 1 bis 5, dadurch gekennzeichnet, daß er zumindest einen der folgenden Additive enthält: Farbstoffe, Inhibitoren, Chelatoren, Viskositätsregler und Emulgatoren.

7. Verwendung des Klebstoffes nach mindestens einem der Ansprüche 1 bis 6, in der Elektroindustrie, insbesondere zum Verkleben von Ferriten und chromatierten Polplatten bzw. verzinkten Stahlgehäusen.

## Claims

1. A two-component aerobically curing adhesive composition consisting of
a) a first component containing
- at least one polyurethane (meth)acrylate and
- optionally other acrylates or methacrylates have a boiling temperature above 120°C at normal pressure
- a radical-forming initiator
- at least one non-transition-metal accelerator
b) a second component containing
- at least one polyurethane (meth)acrylate and
- optionally other acrylates or methacrylates have a boiling temperature above 120°C at normal pressure and
- either a drier mixture containing at least two soluble metal salts of organic acids and
- optionally transition metal accelerators
- or a drier and a transition metal accelerator, the drier and transition metal accelerator being compounds of different metals.

2. An adhesive as claimed in claim 1, characterized in that the initiator is a hydroperoxide.

3. An adhesive as claimed in claim 1 or 2, characterized in that the non-transition-metal accelerator is a compound from the following classes: sulfimides, hydrazine derivatives, tertiary amines, and the transition metal accelerator is a copper salt or complex.

4. An adhesive as claimed in at least one of claims 1 to 3, characterized in that the drier(s) is(are) a metal soap containing Co, Fe or Zr as the metal component and an aliphatic carboxylic acid containing 6 to 10 carbon atoms as the carboxylic acid component.

5. An adhesive as claimed in at least one of claims 1 to 4, characterized in that mixtures of acrylates or methacrylates are used, the alcohol radical containing a hydroxyl, carboxylic acid or urethane group.

6. An adhesive as claimed in at least one of claims 1 to 5, characterized in that it contains at least one of the following additives: dyes, inhibitors, chelators, viscosity controllers and emulsifiers.

7. The use of the adhesive claimed in at least one of claims 1 to 6 in the electrical industry, more particularly for bonding ferrites and chromated pole plates or galvanized steel housings.

## Revendications

1. Composition d'adhésif à durcissement aérobie à deux composants, constituée d'un
a) premier composant renfermant:
- au moins un polyuréthane(méth)acrylate et
- le cas échéant, d'autres acrylates ou méthacrylates présentant une température d'ébullition supérieure à 120 °C, à la pression normale,
- un initiateur formant des radicaux
- au moins un accélérateur exempt de métal de transition
b) deuxième composant renfermant
- au moins un polyuréthane(méth)acrylate et
- le cas échéant, d'autres acrylates ou méthacrylates présentant une température d'ébullition supérieure à 120 °C à la pression normale,
- soit un mélange de matières sèches contenant au moins deux sels métalliques solubles d'acides organiques et
- le cas échéant, un accélérateur à base d'un métal de transition
- soit une matière sèche et un accélérateur à base d'un métal de transition, la matière sèche et l'accélérateur à base d'un métal de transition étant des composés de métaux différents.

2. Adhésif selon la revendication 1, caractérisé en ce que l'initiateur est un hydroperoxyde.

3. Adhésif selon la revendication 1 ou 2, caractérisé en ce que l'accélérateur exempt de métal de transition est un composé appartenant aux classes de substances suivantes: sulfimides, dérivés hydraziniques, amines tertiaires, et en ce que l'accélérateur à base de métal de transition est un sel ou un complexe de cuivre.

4. Adhésif selon au moins une des revendications 1 à 3, caractérisé en ce que la ou les matières sèches est(sont) un savon métallique avec du Co, du Fe et du Zr comme composant métal et avec un acide carboxylique aliphatique comportant 6 à 10 atomes de C comme composant acide carboxylique.

5. Adhésif selon au moins une des revendications 1 à 4, caractérisé en ce que l'on utilise des mélanges d'acrylates ou de méthacrylates, dans lesquels le radical alcoolique renferme chaque fois un groupe hydroxyle, un groupe d'acide carboxylique ou un groupe uréthane.

6. Adhésif selon au moins une des revendications 1 à 5, caractérisé en ce qu'il renferme au moins un des additifs suivants: colorants, inhibiteurs, chélateurs, régulateurs de viscosité et émulsionnants.

7. Utilisation de l'adhésif selon au moins une des revendications 1 à 6, dans l'industrie électrique, en particulier pour le collage des ferrites et des joues magnétiques chromatées ou des bottiers en acier zingué.
